# EUROPEAN PATENT APPLICATION

(11) **EP 3 223 090 A1**
(43) Date of publication of application: **27.09.2017**
(21) Application number: 16198943.9
(22) Date of filing: 15.11.2016
(51) Int. Cl.: G05B 19/042, G05B 23/02, G05B 19/05, G06F 17/30

(54) **SUPERVISORY CONTROL AND DATA ACQUISITION SYSTEM AND DATA ENGINEERING METHOD THEREOF**

(30) Priority: 24.03.2016 KR 20160035432
(71) Applicant: LSIS Co., Ltd., Gyeonggi-Do 14119 (KR)
(72) Inventor: LEE, Seok Chan, Gyeonggi-do 14118 (KR); LEE, Seung Ju, Gyeonggi-do 14118 (KR); YOON, Yeo Chang, Gyeonggi-do 14118 (KR); KONG, Shin Jo, Gyeonggi-do 14118 (KR); YUN, Jang Hyeok, Gyeonggi-do 14118 (KR)
(74) Representative: Zacco Sweden AB

(57) **Abstract**

A supervisory control and data acquisition (SCADA) system (200) includes: a database (120) configured to store data on the SCADA system; a server (220) configured to transmit the data stored in the database to a client in response to a request of the client; and the client configured to display a supervisory screen for monitoring the SCADA system on the basis of the transmitted data, wherein, when data on an object is added as a graphic editor for editing the supervisory screen is executed, the server or client updates the database on the basis of the data on the object, and reflects, to the supervisory screen, creation of the object, input through the graphic editor.

## Description

### BACKGROUND

The present disclosure relates to a supervisory control and data acquisition system and a data engineering method thereof, and more particularly, to a system and a method capable of adding and manipulating a database in a graphic editor on a human-machine interface.

A supervisory control and data acquisition (SCADA) system is a system that supervises and controls working processes based on industrial processes or infrastructures and facilities.

In the SCADA system, a human-machine interface (HMI) is a tool that displays, on a supervisory screen, data related to field facilities or working processes in a form in which a user can recognize the data, and assists the user to control a corresponding process through the data.

Point values for connecting supervisory devices in a field, such as remote terminal units, are mapped to the supervisory screen. The point values are classified and managed in a certain format through a database. A dedicated database editing tool should be used to build the point values as a database.

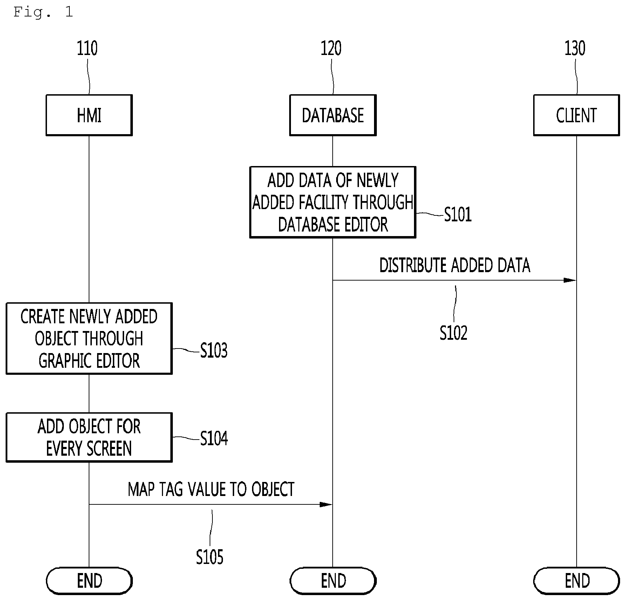

Fig. 1 is a diagram illustrating a process of adding data of a newly added facility in a typical SCADA system.

The SCADA system has a structure of a server managing a database 120 and a client 130 providing a supervisory screen.

Since the database 120 for creating a primary site is enormous, a database file and a schema file are created using a database editor.

However, if data obtained by a newly added facility in a field is to be additionally displayed on the supervisory screen, the database 120 should be built suitable for the facility. Separately from this, the corresponding facility should be created as an object on the supervisory screen.

When a facility is newly added in the field after the database 120 is primarily built, data of the newly added facility is added through the database editor as shown in Fig. 1 (S101).

After that, the added data is distributed to the client 130 such that an actual value obtained by the added facility can be viewed in the client 130 (S102).

A newly added object is created on the supervisory screen through a graphic editor on an HMI (S103). Here, the object may be a facility added in the field.

An object is added for every screen through the graphic editor on the HMI (S104), and a tag value (i.e., a database value) is mapped to the object (S105).

Components currently constituting the SCADA system are individually operated and managed. Therefore, in the process shown in Fig. 1, the database of the server and the supervisory screen of the client should be individually edited and added by an engineer.

In addition, a new database cannot be generated by adding an object such as a circuit breaker on a screen of the server or the client. Therefore, a large amount of cost and effort are required in data engineering.

Further, it is cumbersome to edit a database in engineering of the supervisory screen in terms of adding a database on an added facility or maintaining the existing database.

### SUMMARY

Embodiments provide a method in which, when a previously built remote supervisory control and data acquisition system in a field is maintained, a graphic editor for creating a supervisory screen generates a new object and simultaneously generates and edits a database file and then distributed the database file to a client, so that a user can perform data engineering on the added object.

Technical objects to be achieved in the present disclosure are not limited to the above-described technical objects, and other technical objects that are not described may be clearly understood by those skilled in the art from the following description.

In one embodiment, a supervisory control and data acquisition (SCADA) system includes: a database configured to store data on the SCADA system; a server configured to transmit the data stored in the database to a client in response to a request of the client; and the client configured to display a supervisory screen for monitoring the SCADA system on the basis of the transmitted data, wherein, when data on an object is added as a graphic editor for editing the supervisory screen is executed, the server or client updates the database on the basis of the data on the object, and reflects, to the supervisory screen, creation of the object, input through the graphic editor.

The details of one or more embodiments are set forth in the accompanying drawings and the description below. Other features will be apparent from the description and drawings, and from the claims.

### BRIEF DESCRIPTION OF THE DRAWINGS

Fig. 1 is a diagram illustrating a process of adding data of a newly added facility in a typical supervisory control and data acquisition (SCADA) system.
Fig. 2 is a diagram illustrating a configuration of an SCADA system according to an embodiment.
Fig. 3 is a diagram illustrating a structure of a graphic editor performing a data engineering method in the SCADA system according to the embodiment.
Figs. 4a and 4b are diagrams illustrating examples of an execution screen of the graphic editor performing the data engineering method in the SCADA system according to the embodiment.
Fig. 5 is a diagram illustrating a data engineering process in the SCADA system according to an embodiment.
Fig. 6 is a diagram illustrating a data engineering process in the SCADA system according to an embodiment.
Fig. 7 is a diagram illustrating a data engineering process in the SCADA system according to an embodiment.

### DETAILED DESCRIPTION OF THE EMBODIMENTS

Reference will now be made in detail to exemplary embodiments of the present disclosure, examples of which are illustrated in the accompanying drawings. However, the spirit and scope of the present disclosure may not be limited to the embodiments herein. Moreover, other embodiments may be easily proposed, which will be construed as being included within prior art disclosures or the spirit and scope of the present disclosure by addition, change, deletion of other components.

Further, as the terminology used herein, general terms are selected which are widely used at present, but in a specific case, terms arbitrarily selected by the present applicant may be used. In such a case, it is to be noted that since the meanings of the used terms are definitely taught in a corresponding portion of the detailed description, they should not be simply construed as only the nominal meanings of terms used in the detailed description of the present invention, but should be construed by grasping the implied meanings of the corresponding terms. In the following description, the word "include" or a variation thereof does not exclude existence of elements or steps not listed in the claims.

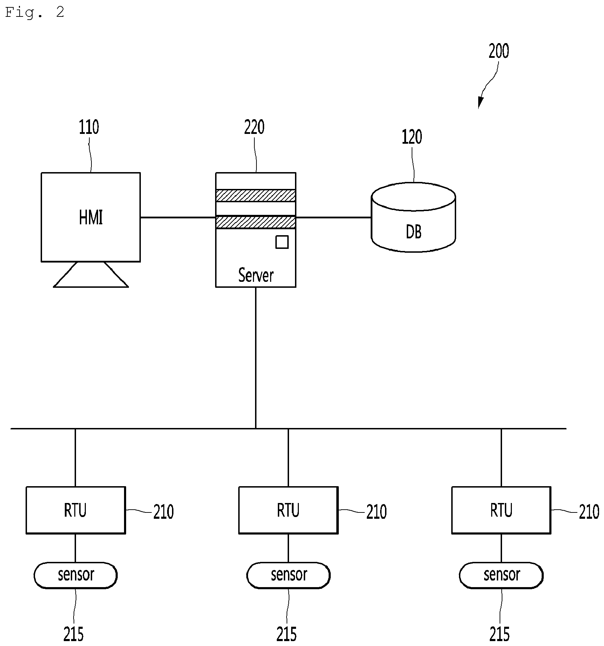

Fig. 2 is a diagram illustrating a configuration of a supervisory control and data acquisition (SCADA) system according to an embodiment.

The SCADA system 200 according to the embodiment includes remote terminal units (RTUs) 210, a server 220, and a human-machine interface (HMI) 110.

The RTU 210 is disposed in an actual field to obtain a data value from a field facility.

To this end, the RTU 210 is directly connected to a sensor 215 installed in a field facility or process, to detect a signal output from the sensor 215 and obtain a data value from the detected signal. Then, the RTU 210 mutually converts the signal output from the sensor 215 into digital data that a computer of server 220 can be recognize, and transmits the converted data to the server 220.

In some embodiments, a programmable logic controller (PLC) (not shown) may be used rather than the RTU 210.

The server 220 collects data related to field facilities or working processes, and issues a substantial command for controlling hardware including field facilities, etc.

To this end, the server 220 edits and manages a database 120. Edition of the database 120 may include generation, addition, and deletion of data. The edition of the database 120 may be performed using a database editor.

Meanwhile, the data value obtained by the RTU 210 may be connected to the database 120. The database 120 may be a real time database (RTDB).

The HMI 110 converts and displays data used in control of a field facility or working process, i.e., a data value obtained by the RTU 210. Accordingly, a user can supervise and control the corresponding process. The HMI 110 may include a dedicated screen file representing the configuration of a field in which the RTU 210 is located.

The HMI 110 is generally connected to software and the database 120 of the SCADA system 200.

When a graphic editor is executed on the HMI 110, a newly added object may be created on a supervisory screen. An object may be added for every created screen, and a tag value may be mapped to the object.

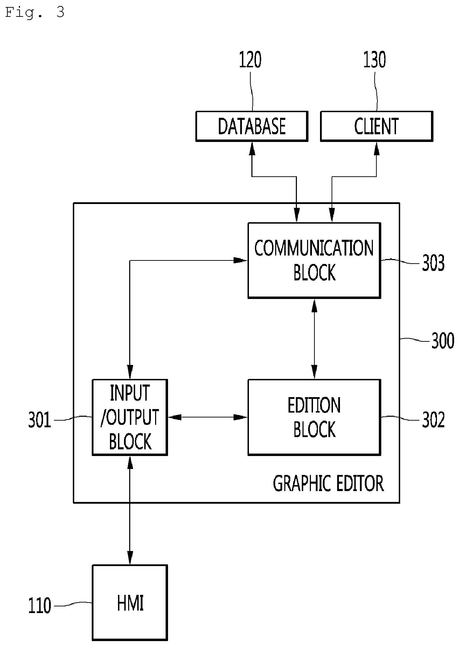

According to the embodiment, as the graphic editor is executed on the HMI 110, a new object is generated, and simultaneously, data on the new object is added, thereby editing the database 120. Then, the added data is distributed to a client 130 (see Fig. 3). This will be described in detail later with reference to Fig. 3.

Meanwhile, although not shown in Fig. 2, the SCADA system 200 may further include a communication unit and a device unit.

The communication unit (not shown) may transmit the data value obtained by the RTU 210 to the server 220, and allow remotely located components of the SCADA system 200, such as the RTU 210 and the server 220, to communicate with each other.

The device unit may perform various processes and analyses.

Fig. 3 is a diagram illustrating a structure of a graphic editor performing a data engineering method in the SCADA system according to the embodiment.

Data and information provided by the HMI 110 are provided to a manager in the form of a diagram obtained by simplifying a corresponding working process. From this, the manager can easily know how the entire working process is performed and controlled.

For example, a picture of a pump connected to a pipe shows that the pump is running and how much fluid rate is currently controlled. At this time, if the manager turns off the pump, the software connected to the HMI 110 displays, in real time, that the flow rate of the corresponding pipe is decreased.

The simplified diagram used as described above may be configured with lines and symbols, which represent elements of the corresponding working process. In addition, the diagram may be configured in a form in which a digitalized image representing each facility is combined with an animated symbol.

In such a manner, images, photographs, and animations are frequently used in HMI 110, and hence a program on the HMI 110 generally includes a graphic editor 300 that is a program taking charge of a graphic related operation.

A manager or a person in charge of maintenance of the SCADA system 200 may directly determine and modify, through the graphic editor 300, how each working process or field facility is to be displayed in HMI 110.

A data engineering process in the SCADA system 200 according to the embodiment may be performed by the graphic editor 300.

The graphic editor 300 may be implemented as codes readable by a computer on a medium written by the program or may be implemented in a modular form. The computer-readable media may include all kinds of recording devices in which data readable by a computer system is stored. The recording devices include not only a tangible storage device but also a device implemented in the form of a carrier wave (e.g., transmission via the Internet). The computer may include a processor or controller of the server 220 or the client 130.

When the graphic editor 300 is implemented as codes readable by the computer on a medium written by the program, the graphic editor 300 may be executed in the server 220 or the client 130 to perform data engineering in the SCADA system 200.

In Fig. 3, it is illustrated that the graphic editor 300 is executed on the HMI 110 of the server 220, but the present disclosure is not limited thereto. The graphic editor 300 shown in Fig. 3 may be executed in the client 130.

In order to perform the data engineering method in the SCADA system 200 according to the embodiment, the graphic editor 300, as shown in Fig. 3, may include an input/output (I/O) block 301, an edition block 302, and a communication block 303.

The I/O block 301 takes charge of an I/O interface with the HMI 110.

Specifically, the I/O block 301 may receive a command related to data engineering input through the HMI 110. Here, the command related to data engineering may include building of data on a newly added object, creation of a corresponding object on a supervisory screen, and the like. For example, if an object, i.e., a circuit breaker, is newly added to a power system being currently supervised by the SCADA system, a manager is to newly add data on the circuit breaker to the existing database and to create an image or diagram representing the circuit breaker on the supervisory screen. In this case, the command related to data engineering may include building of data on the circuit breaker, creation of the circuit breaker on the supervisory screen, and the like.

The I/O block 301 may output, on the supervisory screen, data and information transmitted from the edition block 302 or the communication block 303.

Here, the I/O block 301 may receive an object created by the edition block 302 from the edition block 302 and output the received object on the supervisory screen. Also, the I/O block 301 may receive, from the communication block 303, data that the communication block 303 inquires and searches the database 120, and output the received data on the supervisory screen.

The edition block 302 creates an object to be displayed on the supervisory screen.

The object may be a field facility including a circuit breaker, a thyristor valve, a hydraulic linkage, etc. The object may be represented as a line or figure, an image or picture, an animation image, etc.

The communication block 303 performs communication with the database 120 or the client 130.

The communication of the communication block 303 with the database 120 or the client 130 may include various wire/wireless communications. Specifically, the communication block 303 may be connected to the database 120 or the client 130 via a wire including a power line, a cable, an optical cable, etc. to perform wired communication, or may perform wireless communication including short-range communication, wireless LAN communication, mobile communication, etc.

In this case, the communication block 303 may search desired data by inquiring the database 120 and receive the desired data from the database 120. Also, the communication block 303 may distribute, to the client 130, information on the database 120 and a modified database 120. Here, the distribution may be performed by publish and subscribe communication structure.

Typically, components constituting a SCADA system were independently operated. Therefore, when a new facility is added to the system, an engineer is to respectively edit and add a database of a server and one or a plurality of supervisory screens of an HMI. Moreover, the engineer can merely edit an object at a system level, but cannot add or edit an object on a screen of the server or the client. Therefore, a large amount of cost and effort are required in data engineering. Further, it is cumbersome to perform engineering for maintenance of a previously built database.

When the graphic editor 300 configured as shown in Fig. 3 is executed on the HMI 110, a new object is generated on the supervisory screen through the graphic editor 300, and simultaneously, the database 120 is edited by adding data on the new object. Then, the added data is distributed to the client 130.

Thus, creation of an object and edition of data can be simultaneously performed through the graphic editor 300. Furthermore, when the graphic editor 300 is executed in the server 220 or the client 130, data engineering related to a new object can be performed on a screen of the server 220 or the client 130.

Accordingly, it is possible to perform efficient engineering and to reduce engineering cost. In addition, even when maintenance of a previously built site is performed, creation of an object or addition of data is performed on a user's screen, thereby performing efficient data engineering.

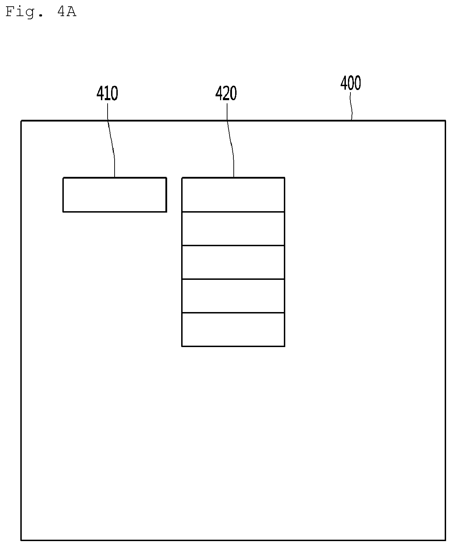

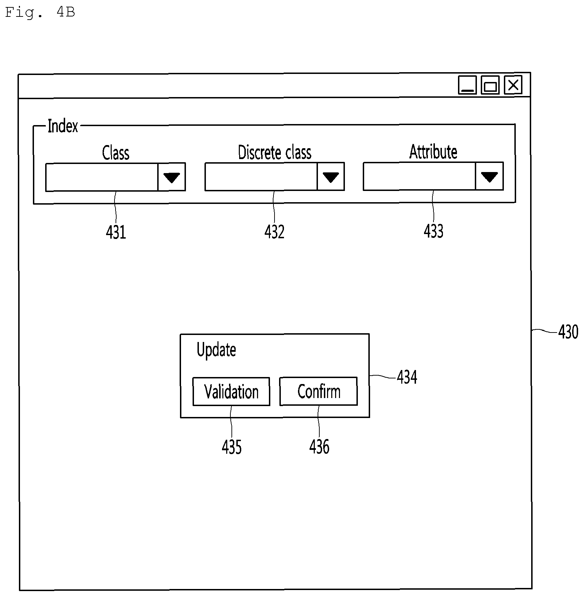

Figs. 4a and 4b are diagrams illustrating examples of an execution screen of the graphic editor performing the data engineering method in the SCADA system according to the embodiment.

Data engineering related to an added object by executing the graphic editor 300 may be performed on a user's screen. In this case, the user may add an object on a screen of the graphic editor 300 and edit data on the added object.

If the user executes the graphic editor 300 through the HMI 110, an execution screen 400 is displayed as shown in Fig. 4a. The execution screen 400 may include an object context 410 and a data context 420. In this case, the object context 410 and the data context 420 may be displayed corresponding to each other. The pair of the object context 410 and the data context 420 corresponding thereto may exist in plurality.

An item related to edition of an object may be input to the object context 410. Specifically, a new object may be added, or an existing object may be replaced or deleted. For example, a circuit breaker as a new object may be added in the SCADA system 200, or a thyristor valve as an existing object may be replaced with another transistor or deleted in the SCADA system 200. Accordingly, a circuit breaker as a new object can be added and displayed to a diagram displayed on the screen of the HMI 110.

If an object is added to the object context 410, the added object may be added to graphic data. Accordingly, the added object can be represented as a diagram displayed on the supervisory screen.

An item related to edition of data on a corresponding object may be input to the data context 420. Specifically, the data on the corresponding object may be added, replaced, or deleted. For example, data of a newly added circuit breaker may be added, or data on the existing thyristor valve may be replaced or deleted.

Fig. 4b illustrates an example of a data editing window 430 displayed when edition of data on an object is performed.

When specific data is input to the data context 420, the data editing window 430 is displayed on a screen. In this case, the user may input detailed contents of the data on the data editing window 430. The detailed contents on the data may include a class of the data, a discrete class of the data, an attribute of the data, and the like.

The class refers to a class of the data.

Specifically, a circuit breaker included in a power system may be configured in a hierarchical structure. For example, the circuit breaker may be configured with a high-class circuit breaker installed in units of cities and a low-class circuit breaker installed in units of boroughs. In this case, if a newly added circuit breaker is installed in units of boroughs, the newly added circuit breaker is classified as a low-class circuit breaker.

The discrete class is a class belonging to equipments corresponding to a field facility (e.g., a circuit breaker having on/off values) representing discrete values.

The attribute is a low-class structure of the class, and refers to detailed information of an object. For example, the attribute may be detailed information of an added field facility.

In the data editing window 430 shown in Fig. 4b, the user inputs a class of data in a class item 431 and then sets whether the class is a discrete class in a discrete class item 432.

The attribute of an object to be input by the user may be changed depending on whether the class is the discrete class. If the content of an attribute item 433 is set and displayed based on a value input to the discrete class item 432, the user select detailed information of the object in the attribute item 433.

In relation to edited data, a processing function, a function of performing log processing on an error in edition, and a function of determining validation of the edited data are to be verified. If the validation of the edited data is verified, the edited data is finally stored permanently in a database, and the database is built by reflecting the edited data without any error.

To this end, the validation of the edited data is checked, by the user, through an update item 434 displayed on the data editing window 430. Specifically, if validation verification is completed after a validation item 435 is selected, a confirm item 436 is selected by the user.

Typically, database update and creation of data were independently performed. That is, the database update was performed as an engineer corrected a separate program at a system level, and a manager selected and mapped a database value for every object when a supervisory screen was created in a graphic editor. Therefore, any data could not be added in the graphic editor. In addition, data was to be previously added by the engineer before an object was created.

According to the present disclosure, as the graphic editor is executed on the user's screen, the user adds data to the existing database while adding an object on the supervisory screen. That is, the user can update a database by adding data not existing in the database through the graphic editor.

Accordingly, the user perform edition by immediately accessing a database file through the graphic editor, so that it is possible to reduce engineering cost and time.

Also, when the supervisory screen is edited, online update of edited data is immediately applied to be distributed to the client. Since a corresponding object and the database are immediately connected in the edition, it is convenient to provide visual distinguishment.

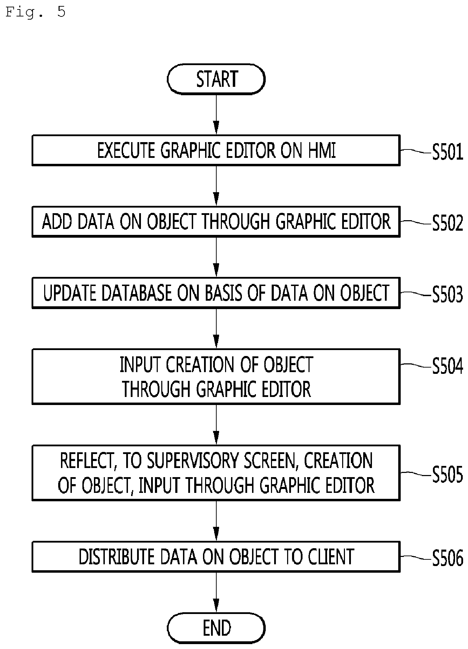

Fig. 5 is a diagram illustrating a data engineering process in the SCADA system according to an embodiment.

When data engineering is performed in the SCADA system 200, the graphic editor 300 is executed on the HMI 110 (S501). The HMI 110 may be executed in the server 220 or the client 130.

Data on an object is added through the graphic editor 300 (S502).

In this case, the SCADA system 200 may add data on an object in response to an input from a user.

Here, the object may be a field facility including a circuit breaker, a thyristor valve, a hydraulic linkage, etc.

The SCADA system 200 updates the database 120 on the basis of the data on the object (S503).

The SCADA system 200 input creation of the object through the graphic editor 300 (S504). Specifically, the SCADA system 200 may input creation of the object in response to an input from the user.

The creation of the object may be an operation of setting at least one of a line, a figure, an image, a picture, and a connection relationship, which represent the object.

The SCADA system 200 reflects, to a supervisory screen, the creation of the object, input through the graphic editor 300 (S505).

The SCADA system 200 distributes the data on the object to the client 130 (S506).

Here, the distribution may be performed by a publish and subscribe communication structure.

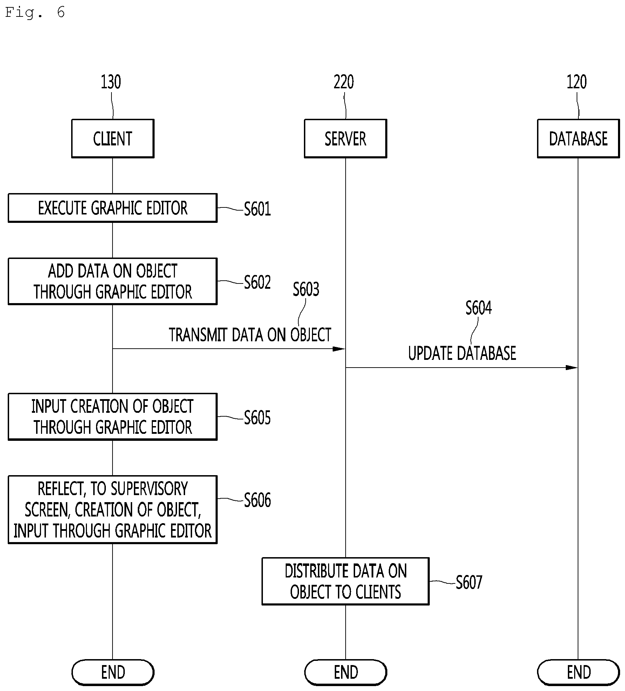

Fig. 6 is a diagram illustrating a data engineering process in the SCADA system according to an embodiment.

In this embodiment, the graphic editor 300 is executed on the HMI 110 of the client 130, and data engineering is performed based on the execution of the graphic editor 300 on the HMI 110 of the client 130.

The graphic editor 300 is executed on the HMI 110 of the client 130 (S601).

Data on an object is added through the graphic editor 300 (S602).

In this case, the graphic editor 300 executed on the HMI 110 of the client 130 may add data on an object in response to an input from a user.

The client 130 transmits the data on the added object to the server 220 (S603).

The server 220 updates the database 120 on the basis of the data on the added object (S604).

The client 130 inputs creation of the object through the graphic editor 300 (S605). Specifically, the client 130 may input creation of the object in response to an input from the user.

The client 130 reflects, to a supervisory screen, the creation of the object, input through the graphic editor 300 (S606) .

The server 220 distributes the data on the object to clients (S607). In this case, the server 220 may distribute the data on the object to clients except the client 130 that has added the data on the object.

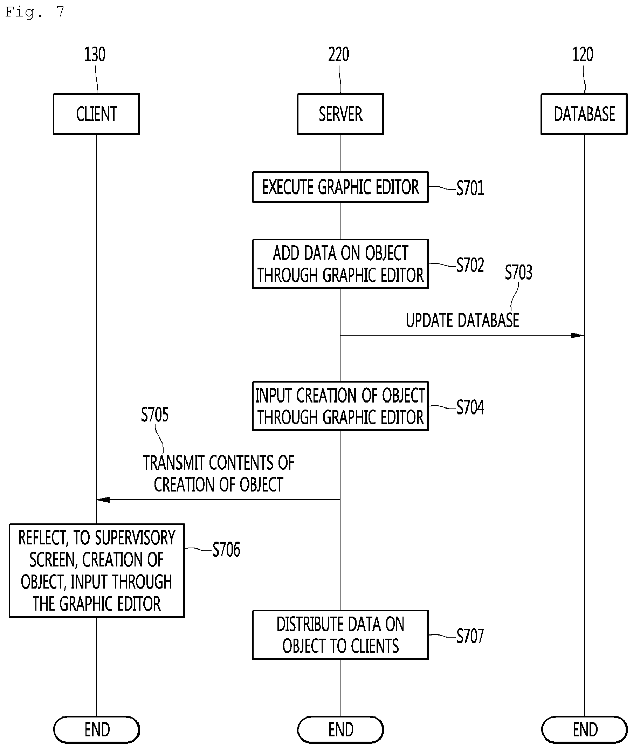

Fig. 7 is a diagram illustrating a data engineering process in the SCADA system according to an embodiment.

In this embodiment, the graphic editor 300 is executed on the HMI 110 of the server 220, and data engineering is performed based on the execution of the graphic editor 300 on the HMI 110 of the server 220.

The graphic editor 300 is executed on the HMI 110 of the server 220 (S701).

Data on an object is added through the graphic editor 300 (S702).

In this case, the graphic editor 300 executed on the HMI 110 of the server 220 may add data on an object in response to an input from a user.

The server 220 updates the database 120 on the basis of the data on the added object (S703).

The server 220 inputs creation of the object through the graphic editor 300 (S704). Specifically, the sever 220 may input the creation of the object in response to an input from the user.

The server 220 transmits, to the client 130, contents of the creation of the object, input through the graphic editor 300 (S705).

The client 130 reflects, to a supervisory screen, the creation of the object, input through the graphic editor 300 (S706) .

The server 220 distributes the data on the object to clients (S707).

According to the present disclosure, data is added to the existing database file as an object is added on a screen through the graphic editor. Accordingly, a user perform edition by immediately accessing the database file through the graphic editor, so that it is possible to reduce engineering cost and time.

Also, in the case of online update, added data is distributed to the client as the online update is immediately applied in edition of a screen. Since a corresponding object and the database are immediately connected in the edition, it is convenient to provide visual distinguishment.

The above described features, configurations, effects, and the like are included in at least one of the embodiments of the present disclosure, and should not be limited to only one embodiment. In addition, the features, configurations, effects, and the like as illustrated in each embodiment may be implemented with regard to other embodiments as they are combined with one another or modified by those skilled in the art. Thus, content related to these combinations and modifications should be construed as including in the scope and spirit of the disclosure as disclosed in the accompanying claims.

Further, although the embodiments have been mainly described until now, they are just exemplary and do not limit the present disclosure. Thus, those skilled in the art to which the present disclosure pertains will know that various modifications and applications which have not been exemplified may be carried out within a range which does not deviate from the essential characteristics of the embodiments. For instance, the constituent elements described in detail in the exemplary embodiments can be modified to be carried out. Further, the differences related to such modifications and applications shall be construed to be included in the scope of the present disclosure specified in the attached claims.

## Claims

1. A supervisory control and data acquisition (SCADA) system (200), comprising:
a database (120) configured to store data on the SCADA system;
a server (220) configured to transmit the data stored in the database to a client (130) in response to a request of the client; and
the client (130) configured to display a supervisory screen for monitoring the SCADA system on the basis of the transmitted data,
wherein, when data on an object is added as a graphic editor (300)for editing the supervisory screen is executed, the server or client updates the database on the basis of the data on the object, and reflects, to the supervisory screen, creation of the object, input through the graphic editor.

2. The SCADA system according to claim 1, wherein the object is a field facility added to the SCADA system.

3. The SCADA system according to claim 1, wherein the server (220) distributes the data on the object to the client.

4. The SCADA system according to claim 1, wherein the graphic editor (300) is executed on a human-machine interface (HMI) for providing an interface with a user.

5. The SCADA system according to claim 1, wherein the data on the object and the creation of the object are input from the user through the graphic editor (300).

6. The SCADA system according to claim 1, wherein the creation of the object is an operation of setting at least one of a line, a figure, an image, a picture, and a connection relationship, which represent the object.

7. The SCADA system according to claim 1, wherein the object comprises at least one of a circuit breaker, a thyristor valve, and a hydraulic linkage.

8. The SCADA system according to claim 1, wherein the creation of the object comprises a method in which a working process and a field facility, which are managed by the SCADA system, are displayed on the supervisory screen.

9. A data engineering method in an SCADA system, comprising:
storing, by a server, data on the SCADA system in a database connected to the server;
transmitting, by the server, the data stored in the database to a client in response to a request of the client; and
displaying, by the client, a supervisory screen for monitoring the SCADA system on the basis of the transmitted data,
wherein, when data on an object is added as a graphic editor for editing the supervisory screen is executed, the server or client updates the database on the basis of the data on the object, and reflects, to the supervisory screen, creation of the object, input through the graphic editor.

10. The data engineering method according to claim 9, wherein the object is a field facility added to the SCADA system.

11. The data engineering method according to claim 9, wherein the server distributes the data on the object to the client.

12. The data engineering method according to claim 9, wherein the server or the client executes the graphic editor on an HMI for providing an interface with a user.

13. The data engineering method according to claim 9, wherein the creation of the object is an operation of setting at least one of a line, a figure, an image, a picture, and a connection relationship, which represent the object.

14. The data engineering method according to claim 9, wherein the object comprises at least one of a circuit breaker, a thyristor valve, and a hydraulic linkage.

15. The data engineering method according to claim 9, wherein the creation of the object comprises a method in which a working process and a field facility, which are managed by the SCADA system, are displayed on the supervisory screen.
